(19) Europäisches Patentamt
European Patent Office
Office européen des brevets

(11) EP 0 783 253 B1

# (12) FASCICULE DE BREVET EUROPEEN

(45) Date de publication et mention de la délivrance du brevet:
**23.10.2002 Bulletin 2002/43**

(21) Numéro de dépôt: **96922181.1**

(22) Date de dépôt: **18.07.1996**

(51) Int Cl.$^7$: **A23L 1/227**

(86) Numéro de dépôt international:
**PCT/IB96/00723**

(87) Numéro de publication internationale:
**WO 97/004667 (13.02.1997 Gazette 1997/08)**

## (54) PRODUITS AROMATISES ET PROCEDE POUR LEUR PREPARATION

ArOMATIsIERTE PRODUKTE UND VERFAHREN ZU IHRER HERSTELLUNG

FLAVOURED PRODUCTS AND METHOD FOR PREPARING SAME

(84) Etats contractants désignés:
**CH DE ES FR GB IT LI NL**

(30) Priorité: **26.07.1995 CH 218995**

(43) Date de publication de la demande:
**16.07.1997 Bulletin 1997/29**

(73) Titulaire: **FIRMENICH SA**
**1211 Genève 8 (CH)**

(72) Inventeurs:
- **FREROT, Eric**
  **F-74100 Ville-la-Grand (FR)**
- **ESCHER, Sina, Dorothea**
  **CH-1232 Confignon (CH)**

(74) Mandataire:
**Salvaterra-Garcia, Maria de Lurdes et al**
**Firmenich SA**
**Département des Brevets**
**Case Postale 239**
**1211 Genève 8 (CH)**

(56) Documents cités:

| | |
|---|---|
| **EP-A- 0 148 133** | **AU-B- 605 797** |
| **DE-A- 3 327 447** | **FR-A- 2 245 298** |
| **US-A- 4 130 555** | **US-A- 4 416 871** |

- **PATENT ABSTRACTS OF JAPAN vol. 013, no. 286 (C-613), 29 Juin 1989 & JP 01 083058 A (NIPPON ZOKI PHARMACEUT), 28 Mars 1989,**
- **DATABASE WPI Section Ch, Week 7632 Derwent Publications Ltd., London, GB; Class B07, AN 76-60705x XP002001536 & JP 51 073 113 A (KIKKOMAN)**
- **DATABASE WPI Section Ch, Week 7929 Derwent Publications Ltd., London, GB; Class D13, AN 79-53837B XP002001537 & JP 54 017 014 B (KIKKOMAN)**
- **JOURNAL OF AGRICULTURAL AND FOOD CHEMISTRY, vol. 23, no. 1, 1975, WASHINGTON US, pages 49-53, XP002001533 M.NOGUCHI ET AL.: "Isolation and identificiation of acidic oligopeptides occurring ina flavor potentiating fraction from a fish protein hydrolysate" cité dans la demande**
- **AGRICULTURAL AND BIOLOGICAL CHEMISTRY, vol. 44, no. 1, 1980, TOKYO JP, pages 93-97, XP002001534 Y.YAMASAKI ET AL.: "Synthesis of a peptide with delicious taste"**
- **TETRAHEDRON LETTERS, vol. 31, no. 2, 1990, OXFORD GB, pages 205-208, XP002001535 J.COSTE ET AL.: "PyBOP:a new peptide coupling reagent devoid of toxic by-products" cité dans la demande**
- **DATABASE WPI, Week 199117 Derwent Publications Ltd., London, BG, Class B03, AN 1991-123727 &SU 1489159 A (AS BELO BIOORG CHEM INST), 15 September 1990**
- **DATABASE WPI, Week 199201 Derwent Publications Ltd., London, BG, Class B04, B05, AN 1992-004505 & JP 3258800 A (TAISHO PHARM CO LTD), 19 November 1991**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 783 253 B1

## Description

### Domaine technique et technique antérieure

La présente invention a trait au domaine des arômes et plus particulièrement à celui de l'aromatisation de produits auxquels on veut conférer une texture plus ample et riche, c'est-à-dire des caractéristiques organoleptiques du type de celles généralement associées aux produits qui contiennent des matières grasses, notamment le beurre et le fromage, ainsi qu'un caractère organoleptique de type épicé, salé, ("savoury").

A cet effet, l'invention concerne l'utilisation à titre d'ingrédient aromatisant :

a) d'un ou plusieurs tripeptides contenant un seul résidu d'acide aminé hydrophobe et au moins un résidu d'acide aminé acide ; et/ou

b) d'un ou plusieurs dérivés d'acide aminé ayant une structure de type N-lactoyl-X, où X représente un résidu d'acide aminé.

Par un "résidu d'acide aminé hydrophobe", on entend ici un résidu de l'un des acides aminés communs généralement reconnus comme étant hydrophobes, à savoir l'alanine (Ala), la méthionine (Met), la valine (Val), la leucine (Leu), la proline (Pro), la phénylalanine (Phe), la tyrosine (Tyr), l'isoleucine (Ile) et le tryptophane (Trp).

De même, par un "résidu d'acide aminé acide", on entend ici le résidu de l'acide glutamique (Glu) ou le résidu de l'acide aspartique (Asp).

Le tripeptide utilisé selon l'invention est ainsi formé par l'un des résidus hydrophobes susmentionnés et au moins un résidu acide parmi Glu et Asp. Le troisième résidu d'acide aminé peut être encore un résidu acide, ou alors il sera sélectionné parmi les résidus de l'un des acides aminés hydrophiles, à savoir la cystéine (Cys), la glycine (Gly), la glutamine (Gln), la serine (Ser), la thréonine (Thr) et l'asparagine (Asn), ou de l'un des acides aminés basiques, à savoir la lysine (Lys), l'arginine (Arg), l'omithine (Orn) et l'histidine (His).

Le terme "résidu d'acide aminé" ci-dessus a le sens commun dans l'art, c'est-à-dire qu'il se réfère à l'ensemble des atomes apportés par l'acide aminé correspondant à la chaîne tripeptidique. Ces résidus seront représentés dorénavant par les abréviations à trois lettres indiquées entre parenthèses ci-dessus et qui sont d'un usage courant dans la définition de la structure des chaînes polypeptidiques (voir, par exemple, Eur. J. Bioch. **1984**, 138, 9-37).

Selon l'invention, on peut utiliser à titre d'ingrédient aromatisant, à la place du tripeptide ou en plus de celui-ci, un dérivé d'acide aminé ayant une structure de type N-lactoyl-X, où X représente un résidu d'acide aminé. Il s'agit donc de composés qui comprennent un radical N-lactoyle ou 2-hydroxypropanoyle, que l'on désignera dorénavant par l'abréviation "Lac", et un résidu de l'un des acides aminés communs cités plus haut. Ainsi, et pour donner un exemple spécifique, l'un de ces dérivés selon l'invention est le dérivé (S)-Lac-Met, dont la structure est la suivante :

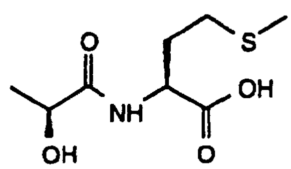

Comme il est apparent de ce qui précède, en raison de la présence de carbones asymétriques dans la structure des composés de l'invention, ils peuvent se présenter sous forme de plusieurs isomères configurationnels, lesquels, pour les buts de l'invention, peuvent tous être utilisés de façon satisfaisante, soit individuellement, soit sous forme de mélanges d'isomères. Leur configuration sera d'ailleurs typiquement conditionnée par celle des acides aminés de départ, servant à préparer les tripeptides et dérivés lactoyle selon l'invention.

Nous avons en effet découvert que les tripeptides et les dérivés d'acide aminé susmentionnés sont des ingrédients aromatisants très utiles, lesquels, malgré le fait qu'ils sont pratiquement dépourvus d'un goût propre, sont néanmoins capables d'impartir aux produits auxquels ils sont ajoutés des notes organoleptiques très appréciées et notamment une rondeur, crémosité et consistance tout à fait remarquables. De ce fait, ils permettent donc d'améliorer la sensation en bouche ou "mouthfeel" des produits auxquels ils sont ajoutés, un résultat particulièrement utile lorsque ces tripeptides et dérivés d'acide aminé sont utilisés pour la préparation de compositions aromatisantes destinées à l'aromatisation de produits de consommation "allégés" ou "low-calorie", c'est-à-dire pauvres en matières grasses, ou lorsqu'ils sont ajoutés directement à ces produits. Il a été constaté en particulier que, lorsque combinés à d'autres ingrédients aromatisants d'usage courant, constitués essentiellement de compositions à base de substances volatiles capables de conférer un goût particulier aux produits dans lesquels elles sont incorporées, ils pouvaient non seulement

exalter l'effet organoleptique de ces volatiles mais, en plus, ils servaient à créer une ampleur et plénitude du type de celle qui est conférée par la présence de matières grasses dans les aliments et dans les compositions aromatisantes de type beurre ou fromage conventionnelles, souvent préparées à l'aide de concentrés naturels dérivés du lait et produits analogues.

Par ailleurs, il a aussi été observé que les tripeptides et dérivés d'acide aminé selon l'invention étaient également capables de produire des effets organoleptiques du type de celui que l'on peut obtenir avec le monosodium glutamate (MSG), un ingrédient aromatisant bien connu pour son effet de type "umami" et largement utilisé par exemple dans la cuisine de type oriental. Ils pouvaient en effet contribuer à conférer ou renforcer ce caractère umami dans les produits dans lesquels ils étaient incorporés et remplacer, du moins partiellement, le MSG, leur effet étant moins bouillon et moins salé que celui de ce dernier et de ce fait plus utile pour certains types d'applications.

Or, ce résultat est tout à fait inattendu au vu de l'art antérieur. En effet, malgré le fait que l'on connaît quelques tripeptides en tant que composants naturels par exemple du fromage, de la sauce soja ou encore de l'hydrolysat de poisson, il s'agit pour la plupart de tripeptides qui, soit ne contiennent pas de résidus hydrophobes, soit en contiennent deux ou trois, leur goût étant alors trop amer pour un emploi utile. D'autre part, l'effet organoleptique des tripeptides identifiés à ce jour dans des produits naturels a souvent été considéré bien inférieur à celui du MSG, même dans les cas où ces tripeptides se sont révélés organoleptiquement intéressants.

Ainsi, à notre connaissance, seuls M. Nogushi et al., J. Agr. Food Chem., **1975**, 23, 49, ont identifié, dans un hydrolysat de poisson, des tripeptides contenant un seul résidu hydrophobe, à savoir les Glu-Asp-Val, (Glu,Ile)-Asp, Glu-Gly-Ala et Ile-Glu-Glu. Cependant, alors que les autres tripeptides mentionnés par ces auteurs, à caractère essentiellement acide, sont décrits comme ayant un goût ressemblant à celui du MSG, mais d'une intensité bien plus faible, les tripeptides cités qui ont un résidu hydrophobe ont été considérés non intéressants et décrits comme ayant un goût amer ou plat. Aucune suggestion n'est d'ailleurs faite quant à l'intérêt potentiel de ces derniers pour une utilisation aromatique, contrairement au cas des tripeptides acides.

Par ailleurs, bien que plusieurs tripeptides contenant un résidu hydrophobe et au moins un résidu acide aient été cités auparavant dans le cadre d'études de synthèses de protéines, à notre connaissance il n'a jamais été suggéré d'ajouter de tels tripeptides à des produits de consommation, ou encore à des compositions aromatisantes contenant d'autres ingrédients aromatisants d'usage courant, pour améliorer leur sensation en bouche ou "mouthfeel", ou pour modifier leur profil organoleptique.

En ce qui concerne les dérivés d'acide aminé de type Lac-X, à notre connaissance, seuls les Lac-Phe, Lac-Ile, Lac-Ala, Lac-Val et Lac-Gly ont été cités dans la littérature, et ceci dans le cadre d'études totalement étrangères au domaine des arômes. Il n'existe donc aucune description des propriétés organoleptiques de ces composés cités auparavant.

## Description de l'invention

L'invention a donc pour objet un procédé d'aromatisation d'aliments et autres produits comestibles, selon lequel on utilise en tant qu'ingrédient aromatisant un tripeptide et/ou un dérivé d'acide aminé tels que cités plus haut.

Ainsi, selon un mode d'exécution préféré de l'utilisation selon l'invention, on ajoute à un produit comestible pour l'homme ou les animaux, ou à un produit pharmaceutique, un ou plusieurs tripeptides et/ou un ou plusieurs dérivés d'acide aminé, tels que définis ci-dessus, en quantité suffisante pour impartir, améliorer ou augmenter la sensation en bouche ou "mouthfeel" dudit produit.

Selon un autre mode d'exécution préféré de l'invention, le tripeptide utilisé en tant qu'agent aromatisant contient deux résidus acides. Comme il ressort des exemples présentés plus loin, ces tripeptides contenant un résidu hydrophobe et deux résidus acides, et plus particulièrement ceux où les résidus acides sont des résidus glutamyles, confèrent aux compositions aromatisantes et produits aromatisés des notes organoleptiques tout à fait remarquables et renforcent leur rondeur, crémosité et, d'une façon générale, la sensation qu'ils provoquent dans la bouche lorsqu'ils sont consommés.

Par ailleurs, il a aussi été observé que des résultats particulièrement utiles, d'un point de vue organoleptique, étaient obtenus lorsque le tripeptide utilisé était sélectionné parmi les Glu-Glu-Leu, γGlu-Glu-Leu ou Glu(Glu-Leu), Leu-Glu-Glu, Glu-Asp-Phe, Glu-Glu-Ile, Asp-Glu-Leu et Glu-Leu-Glu. Le Glu-Glu-Leu, en particulier, s'est révélé très efficace pour conférer des notes aromatiques du type de celles qui sont caractéristiques du MSG, notamment lorsque ce peptide était utilisé dans des quantités molaires comparables à celles dans lesquelles le MSG est typiquement employé.

D'une façon générale, il a été trouvé que le tripeptide de l'invention avait un impact comparable en intensité à celui du MSG, tout en conférant un goût bouillon salé moins prononcé.

Parmi les dérivés d'acide aminé pouvant être utilisés selon l'invention, on a observé que les meilleurs résultats étaient obtenus avec les Lac-Glu, Lac-Ala et Lac-Met et en particulier avec ce dernier.

Les produits aromatisés résultant de l'utilisation selon l'invention, contenant les tripeptides et/ou les dérivés

d'acide aminé susmentionnés, font également l'objet de cette dernière. Ils peuvent se présenter sous forme de produits finis tels qu'aliments et boissons, auxquels on a ajouté directement les tripeptides et/ou les dérivés de type Lac-X susmentionnés. Alternativement, les composés de l'invention peuvent servir à la préparation de compositions aromatisantes destinées elles-mêmes à être incorporées dans les produits finis cités. Ces compositions aromatisantes contiendront typiquement d'autres ingrédients aromatisants dont l'effet peut être d'influencer le goût de l'aliment plutôt que sa consistance ou "mouthfeel", ainsi que des solvants ou adjuvants d'usage courant notamment des supports courants de microencapsulation. Les composés aromatisants de l'invention peuvent d'ailleurs être utilisés en combinaison avec des compositions aromatisantes du type de celles décrites dans les demandes de brevet. WO 95/34222 et WO 96/10927.

Les compositions aromatisantes ainsi obtenues peuvent être utilisées pour améliorer ou augmenter la sensation en bouche ou "mouthfeel" d'une grande variété de produits comestibles pour l'homme ou les animaux. On peut citer à titre d'exemple les margarines et beurres allégés, ainsi que les yoghourts, les glaces et crèmes glacées, les fromages, le lait et les produits à base de lait ou de dérivés de celui-ci, y compris les boissons, mais aussi des produits alimentaires tels que des plats cuisinés prêts à consommer, des mayonnaises, des soupes, des sauces, des biscuits doux ou salés, des chocolats, des bonbons et caramels, des amuse-gueules, les chips en particulier, des desserts et des boissons, notamment du type fruits tropicaux, ou encore des aliments destinés aux animaux.

Bien entendu, et comme il a été cité auparavant, de tels produits aromatisés peuvent également être obtenus en ajoutant directement à ces produits les tripeptides et/ou les dérivés d'acide aminé de l'invention.

D'une façon générale, tous les produits alimentaires allégés peuvent être améliorés, du point de vue de leur consistance et de la sensation en bouche, à l'aide de ces tripeptides et ou dérivés d'acide aminé, ou des compositions aromatisantes les contenant. En plus, comme il ressort des exemples présentés plus loin, les peptides et dérivés d'acide aminé selon l'invention peuvent également modifier les notes gustatives de la composition ou aliment dans lequel ils sont intégrés, ceci en parallèle avec, ou indépendamment de, l'effet de type crémeux et "mouthfeel" déjà cité plus haut. Ainsi ces composés de l'invention se révèlent utiles pour toutes les applications dites de type "savoury", c'est-à-dire épicées, salées, piquantes. Ils conviennent donc particulièrement à l'aromatisation de plats cuisinés ou encore d'amuse-gueules et autres salés, ainsi qu'à la préparation d'arômes et compositions aromatisantes destinées à ce type d'aliments.

Il va de soi que, malgré le fait que ces ingrédients aromatisants selon l'invention soient particulièrement utiles dans l'aromatisation de produits allégés en graisses, ils peuvent également être utiles pour aromatiser des aliments ordinaires, non allégés, auxquels on veut impartir une consistance plus ample et crémeuse, ou accentuer les attributs organoleptiques liés à la présence des matières grasses et/ou du MSG. C'est le cas notamment des préparations de type viandeux, des fromages ou des beurres et margarines, produits dans lesquels les tripeptides et dérivés de type Lac-X susmentionnés se sont révélés particulièrement utiles et efficaces pour le but recherché.

Les concentrations dans lesquelles les tripeptides et dérivés d'acide aminé selon l'invention peuvent être ajoutés aux produits variés mentionnés plus haut dépendent de la nature de ces produits et de l'effet aromatisant que l'on désire obtenir. Elles peuvent donc varier dans une gamme de valeurs très étendue. Par exemple, lorsque ces composés sont utilisés pour la préparation de compositions aromatisantes destinées à être elles-mêmes incorporées dans des aliments et boissons, ils seront typiquement ajoutés à ces compositions dans des proportions de l'ordre de 0,01 à 1%, ou même jusqu'à 10% en poids, par rapport au poids de la composition. Lorsque les composés de l'invention sont directement ajoutés aux aliments et boissons que l'ont veut aromatiser, ils pourront être utilisés dans des proportions de l'ordre de 0,001 à 0,5 %, ou même 1%, en poids, par rapport au poids de l'aliment ou boisson. Bien entendu, ces valeurs ne peuvent être données qu'à titre indicatif, des concentrations inférieures ou supérieures aux limites citées ci-dessus pouvant s'avérer appropriées à l'expérience pratique dans certaines applications. L'homme du métier est d'ailleurs à même de les choisir en fonction de la nature de ces dernières.

Il convient de noter que des compositions aromatisantes selon l'invention incluent notamment les mélanges de deux ou plusieurs tripeptides tels que définis plus haut, les mélanges de deux ou plusieurs dérivés de type Lac-X tels que définis auparavant, ou encore les mélanges d'un ou plusieurs de ces tripeptides avec un ou plusieurs de ces dérivés. Il a en effet été constaté que ces mélanges permettaient d'obtenir des effets organoleptiques particulièrement riches et équilibrés. Par ailleurs, il a aussi été constaté que ces composés se combinaient particulièrement bien avec des acides aminés, renforçant l'effet organoleptique de ces derniers, lesquels confèrent une bonne plénitude aux compositions aromatisantes, les tripeptides et composés de structure Lac-X de l'invention apportant une ampleur et un volume complémentaires.

L'invention fournit ainsi des procédés d'aromatisation et plus particulièrement des compositions aromatisantes capables d'améliorer ou de conférer les caractères organoleptiques qui sont typiques de la présence des matières grasses ou d'ingrédients tels que le MSG dans les aliments. On remarque notamment une amélioration de la consistance crémeuse et une sensation en bouche plus ample et volumineuse de ces aliments et boissons obtenus selon l'invention. Ils ont plus d'impact et un goût plus durable dans la bouche, ainsi qu'un "mouthfeel" accru, que les aliments correspondants n'ayant pas été aromatisés selon l'invention.

## Manières de réaliser l'invention

Les tripeptides et les dérivés d'acide aminé définis plus haut peuvent être préparés à partir de produits disponibles dans le marché et selon des procédés qui font usage de réactions conventionnelles. De telles réactions peuvent être de type essentiellement chimique, comme il est illustré ci-après, ou de type enzymatique, à partir de substrats appropriés.

Parmi les procédés de type chimique, on a par exemple utilisé des méthodes classiques de synthèse de peptides en solution, faisant usage de réactifs courants de couplage peptidique, tels que le PyBOP® (hexafluorophosphate de benzotriazolyloxy-tris[pyrrolidino]-phosphonium ; voir J. Coste et al.,Tetrahedron Lett. **1990**, 31, 205 et **1991**, 47, 259). Le schéma suivant illustre la stratégie d'une synthèse utilisée pour préparer les tripeptides de l'invention, appliquée au cas particulier du tripeptide Leu-Glu-Glu:

SCHEMA I

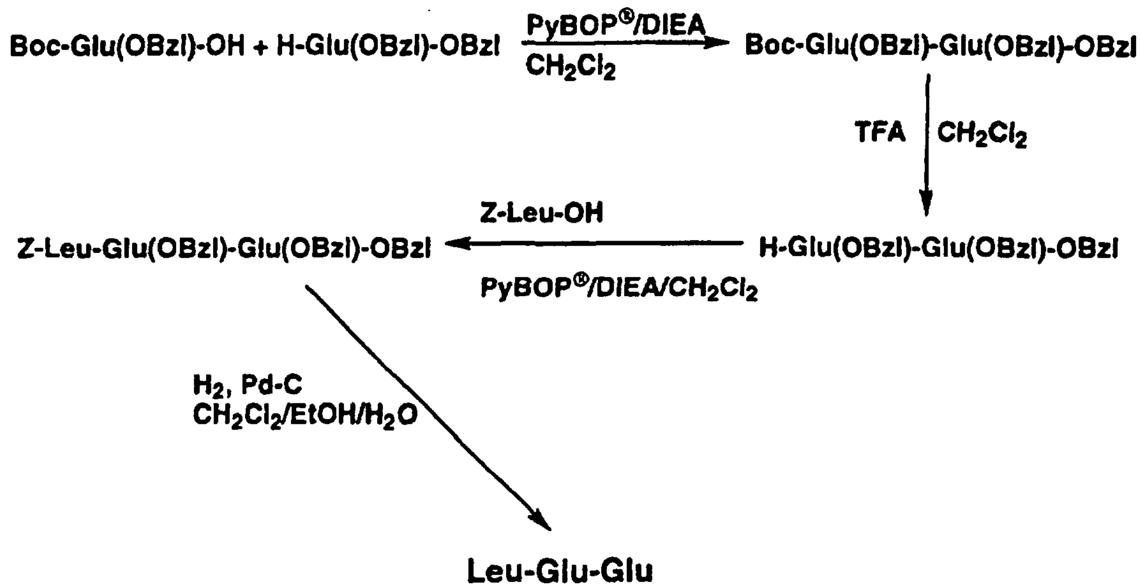


Boc = résidu tert-butyloxycarbonyle

Bzl = groupe benzyle

DIEA = diisopropyl-éthylamine

TFA = acide trifluoroacétique

Z = résidu benzyloxycarbonyle

Selon ce schéma, la préparation des tripeptides implique donc quatre étapes, deux de couplage et deux de déprotection. Etant donnée l'utilisation alimentaire à laquelle ces produits sont destinés, il a été nécessaire de les obtenir à un état pur, entièrement libérés de tout sous-produit organique, ainsi que de sels, ces derniers pouvant modifier le goût du peptide et son effet organoleptique. Cette exigence a conditionné le choix de l'hydrogénolyse en tant que réaction de déprotection finale.

Comme il est illustré au Schéma I, deux acides aminés appropriés de configuration L sont couplés entre eux, en présence de PyBOP ® et dans un solvant approprié. Le dipeptide protégé ainsi obtenu est déprotégé par acidolyse, à l'aide d'acide trifluoroacétique (TFA), et ensuite couplé avec le troisième acide aminé N-protégé pour former un tripeptide protégé. La déprotection de ce dernier par hydrogénolyse, dans un solvant constitué par un mélange de dichlorométhane, d'éthanol et d'eau, fournit le tripeptide désiré à l'état pur.

Méthodes générales

A. Réactions de couplage

Une solution ou suspension dé l'acide aminé N-protégé (1 équiv.), de l'amino ester ou du sel d'ester peptidique (1 équiv.), et de PyBOP® (1 équiv.) dans le dichlorométhane (2 ml/mmole) a été traitée sous agitation avec diisopropyléthylamine (DIEA) pendant 1-2 h, à température ambiante. La réaction a été suivie par chromatographie en couche mince (CCM). Le mélange a été versé dans de l'acétate d'éthyle (50 fois le volume de dichlorométhane) et la solution résultante traitée comme suit : la phase organique a été lavée avec des solutions aqueuses de $KHSO_4$ à 5%, $NaHCO_3$ à 5% et saumure, séchée sur $Na_2SO_4$, filtrée et le solvant évaporé sous vide.

Le produit ainsi obtenu a été purifié par "flash" chromatographie sur silica-gel, en utilisant un éluant approprié.

Les acides aminés protégés de départ ont été achetés chez Novabiochem, Bachem ou Propeptide et utilisés tels quels. Le PyBOP® (origine : Nova) a été dissous dans le dichlorométhane, lavé avec de l'eau millipore, séché sur $Na_2SO_4$ et récupéré par concentration sous vide avant d'être utilisé.

B. Déprotections intermédiaires

Une solution de N-tert-butyloxycarbonyl-peptidyl ester dans un mélange 1:1 d'acide trifluoroacétique (TFA)/dichlorométhane (5 ml/mmole) a été agitée pendant 20 min à température ambiante. Les solvants ont été évaporés sous vide et les traces d'acide trifluoroacétique restant par co-évaporation avec de l'éther diéthylique et sous vide poussé. Les sels d'esters peptidiques ainsi obtenus ont été utilisés tels quels dans la deuxième réaction de couplage, selon la méthode décrite sous A.

C. Déprotections finales

Une suspension du peptide N-benzyloxycarbonyl-protégé et Pd à 10% sur charbon actif (10% en poids par groupe protecteur), dans un mélange dichlorométhane/éthanol/eau 10:12:4 (26 ml/mmole), a été agitée à température ambiante et sous pression atmosphérique d'hydrogène pendant 4 jours. Après filtration du palladium sur Celite®, les solvants organiques ont été concentrés sous vide et on a ajouté de l'eau de source sans gaz (50 ml/mmole). La solution aqueuse a été lavée deux fois à l'acétate d'éthyle et deux fois à l'éther. On a évaporé les solvants organiques sous vide et la solution aqueuse a été lyophilisée.

Les méthodes décrites ci-dessus ont permis d'obtenir les tripeptides désirés avec des rendements globaux généralement supérieurs à 60%.

Tous les peptides ont été analysés par RMN (résonance magnétique nucléaire) du proton et $^{13}C$, en utilisant des corrélations de type COSY et HMQC. Ils ont également été analysés par SM (spectrométrie de masse), à l'aide de techniques d'ionisation chimique (DCI-SM, $NH_3$) ou electrospray (ESI-SM/SM), et par HPLC (chromatographie liquide à haute performance).

Conditions des analyses spectrales

HPLC

Chromatogrammes obtenus dans un appareil Spectra Physics ou Beckman, à 30° C, avec un détecteur UV à 214 nm, colonne Nucleosil ® RP-18, 5 μm, 100 Å, 25 cm x 0,40 cm ; solvant A: TFA à 0,1 % dans l'eau ; solvent B: TFA à 0,1 % dans un mélange eau/acétonitrile 3:7; gradient de B: 0 % (0 --- 5 min), augmentation linéaire à 64 % (5 ---- 40 min) ; débit 1 ml/min.

RMN

Spectres obtenus avec un Bruker AMX-360 et ARX-400.

DCI-SM

Spectres obtenus avec un appareil Finnigan MAT-4500, en utilisant de l'ammoniac en tant que gaz ionisant et un filament à 70 eV.

ESI-SM/SM

Spectromètre de type VG Biotech BIO-Q ou Finnigan TSQ 700, en utilisant de la myoglobine pour calibrer dans la gamme m/z 550-1650 ; des aliquots de 10 µl on été directement injectés dans la source et l'élution a été effectuée avec des volumes équivalents d'acétonitrile, TFA aqueux à 0,1 %, méthoxyéthanol et isopropanol, à un débit de 7 µl (VG Biotech) ou avec un mélange d'eau/méthanol (3:1) contenant 0,1% d'acide acétique, à 10 µl/min (Finnigan).
On a ainsi préparé les tripeptides suivants:

**1. Glu-Asp-Ile**

Rendement : 88% ; pureté : 92,6%

RMN($^1$H,360MHz,$D_2O$): 4,83 (m/HDO, 1H, Hα Asp); 4,27 (d, J = 5,6 Hz, 1H, Hα Ile); 4,11 (~t, J = 6,7 Hz, 1H, Hα Glu); 2,94 (dd, $J_1$ = 16,4 Hz, $J_2$ = 5,6 Hz, 1H, Hβ Asp); 2,81(dd, $J_1$ = 16,4 Hz, $J_2$ = 7,6 Hz, 1H, Hβ Asp); 2,54 (~t, J = 7,1Hz, 2H, Hγ Glu); 2,18 (-dd, $J_1$ = 7,1 Hz, $J_2$ = 6,7 Hz, 2H, Hβ Glu); 1,98-1,87 (m, 1H, Hβ Ile); 1,50-1,40 (m, 1H, Hγ Ile); 1,27-1,15 (m, 1H, Hγ Ile); 0,93 (d, J = 6,7 Hz, 3H, $CH_3$γ Ile); 0,87 (~t, J = 7,1 Hz, 3H, $CH_3$δ Ile) δ ppm

RMN($^{13}$C) : 179,3 (s); 178,6 (s); 177,2 (s); 172,0 (s); 61,1 (d); 55,2 (d); 53,3 (d); 39,4 (d); 38,7 (t); 32,2 (t); 29,0 (t); 27,6 (t); 18,0 (q); 13,6 (q) δ ppm

ESI-SM/SM : 376,3 ($Y_3$"); 358,4 ($B_3$); 340,4; 312,4; 294; 247,4 ($Y_2$"); 245,4 ($B_2$); 227,3; 181,1; 132,1 ($Y_1$"); 102,0 (A1); 86,1 (($Y_1$'$A_3$)$_1$)

**2. Glu-Asp-Phe**

Rendement : 100% ; pureté : 80,8%

RMN($^1$H,360MHz,$D_2O$): 7,35 (m, 2H, Ph); 7,28 (m, 3H, Ph); 4,76 (~dd/HDO, $J_1$~8 Hz, $J_2$~5 Hz, 1H, Hα Asp); 4,62 (dd, $J_1$ = 8,8 Hz, $J_2$ = 5,0 Hz, 1H, Hα Phe) ; 4,02 (~t, J = 6,4 Hz, 1H, Hα Glu); 3,22 (dd, $J_1$ = 14,0 Hz, $J_2$ = 5,0 Hz, 1H, Hβ Phe); 3,01 (dd, $J_1$ = 14,0 Hz, $J_2$ = 8,8 Hz, 1H, Hβ' Phe); 2,86 (dd, $J_1$ = 16,8 Hz, $J_2$ = 5,2 Hz, 1H, Hβ Asp); 2,73 (dd, $J_1$ = 16,8 Hz, $J_2$ = 8,4 Hz, 1H, Hβ' Asp); 2,38 (~dd, $J_1$ = 14,0 Hz, $J_2$ = 7,6 Hz, 2H, Hγ Glu); 2,12-1,96 (m, 2H, Hβ Glu) δ ppm

RMN($^{13}$C) : 179,2 (s); 178,1 (s); 177,0 (s); 174,1 (s); 171,8 (s); 139,6 (s, Ph); 132,2; 131,6; 130,0 (3d, Ph); 57,6 (d, Cα Phe); 55,1 (d, Cα Glu); 53,1 (d, Cα Asp); 39,7 (t, Cβ Phe); 38,7 (t, Cβ Asp); 32,2 (t, Cγ Glu); 28,9 (t, Cβ Glu) δ ppm

ESI-SM/SM : 410,3 ($Y_3$"); 392,3 ($B_3$); 328,4; 218,2 ($Y_2$"); 245,3 ($B_2$); 227,1; 199,0; 166,1 ($Y_1$"); 120,0 (($Y_1$'$A_3$)$_1$); 102,3 ($A_1$)

**3. Leu-Glu-Glu**

Rendement : 87% ; pureté : 86,5%

RMN($^1$H,360MHz,$D_2O$) : 4,47 (~t, J = 7,2 Hz, 1H, Hα Glu); 4,36 (bs, 1H, Hα Glu); 4,05 (~t, J = 6,8 Hz, 1H, Hα Leu); 2,51-2,42 (m, 4H, Hγ Glu); 2,06-1,92 (m, 2H, Hβ Glu); 1,80-1,49 (2m, 3H, Hβ Leu, Hγ Leu); 0,95 (~t, J = 5,6 Hz, 3H, $CH_3$ Leu) δ ppm

RMN($^{13}$C) : 180,3 (s); 175,5 (s); 175,2 (s); 173,2 (s); 56,0 (d); 54,7 (d); 42,8 (t); 33,1 (t); 29,1 (t); 26,8 (d); 24,6 (q); 24,1 (q) δ ppm

ESI-SM/SM : 390,5 ($Y_3$"); 372,5 ($B_3$); 344,3 ($A_3$); 277,1 ($Y_2$"); 259,1; 243,3 ($B_2$); 215,3 ($A_2$); 197,0; 180,2; 148,2 ($Y_1$"); 102,0 ($Y_1$'$A_3$); 86,3 (($Y_2$'$A_1$)$_1$)

**4. Glu-Glu-Leu**

Rendement : 100% ; pureté : 79,7%

RMN($^1$H,360MHz,$D_2O$): 4,47 (~t, J = 6,8 Hz, 1H, Hα Glu); 4,38 (bs, 1H, Hα Glu); 4,13 (~t, J = 6,4 Hz, 1H, Hα Leu); 2,52 (~q, 4H, Hγ Glu); 2,20-2,10 (m, 3H, Hβ Glu); 2,08-1,96 (m, 1H, Hβ Glu); 1,72-1,60 (bs, 3H, Hγ Leu, Hβ Leu); 0,92; 0,88 (2d, J = 5,6 Hz, 6H, $CH_3$ Leu) δ ppm

RMN($^{13}$C) : 180,1 (s); 179,6 (s); 179,3 (s); 175,3 (s); 171,9 (s); 55,9 (d, Cα Glu); 55,1 (d, Cα Glu); 54,8 (d, Cα Leu); 42,4 (t, Cβ Leu); 32,8 (t, Cγ Glu); 32,2 (t, Cγ Glu); 29,1 (t, Cβ Glu); 28,9 (t, Cβ Glu); 27,4 (d, Cγ Leu); 25,1; 23,5 (2q, $CH_3$ Leu) δ ppm

ESI-SM/SM : 390,5 ($Y_3$"); 372,3 ($B_3$); 354,4; 326,4; 261,2 ($Y_2$"); 259,2 ($B_2$); 241,1; 231,1($A_2$); 213,1; 195,2; 167,2; 132,1 ($Y_1$"); 102,1 ($A_1$); 86,1 (($Y_1$'$A_3$)$_1$)

**5. Glu-Glu-Ile**

Rendement : 57% ; pureté : 84,4%

RMN($^1$H,360MHz,$D_2O$): 4,47 (dd, $J_1$ = 8,4 Hz, $J_2$ = 6,0 Hz, 1H, Hα Glu); 4,13-4,07 (m, 2H, Hα Glu, Hα Ile); 2,44-2,32 (m, 4H, Hγ Glu); 2,18-2,07 (m, 3 H, Hβ Glu); 2,01-1,91 (m, 1H, Hβ Glu); 1,88-1,79 (m, 1H, Hβ Ile);

1,48-1,37 (m, 1H, Hγ Ile); 1,22-1,10 (m, 1H, Hγ Ile); 0,90 (d, J = 6,4 Hz, 3H, $CH_3$γ Ile); 0,87 (t, J = 6,8 Hz, 3H, $CH_3$δ Ile) δ ppm

RMN($^{13}C$): 175,2 (s); 172,3 (s); 62,8 (d); 56,4 (d); 55,6 (d); 39,7 (d); 35,2 (t); 34,9 (t); 30,0 (t); 27,5 (t); 18,2 (q), 13,6 (q) δ ppm

ESI-SM/SM : 390,5 ($Y_3$"); 372,4 ($B_3$); 354,4; 326,4; 259,1 ($B_2$); 241,1; 231,1($A_2$); 213,1; 167,1; 132,1 ($Y_1$"); 102,1 ($A_1$); 86,0 (("$Y_1$'$A_3$)$_1$)

**6. Asp-Glu-Ile**

Rendement : 85% ; pureté : 88,2%

RMN($^1H$,360MHz,$D_2O$): 4,51(dd, $J_1$ = 7,6 Hz, $J_2$ = 5,2 Hz, 1H); 4,37 (dd, $J_1$ = 7,2 Hz, $J_2$ = 5,2 Hz, 1H); 4,28 (d, J = 6,0 Hz, 1H, Hα Ile); 3,04 (dd, $J_1$ = 18,0 Hz, $J_2$ = 5,2 Hz, 1H, Hβ Asp); 2,92 (dd, $J_1$ = 18,0 Hz, $J_2$ = 8,0 Hz, 1H, Hβ Asp); 2,51 (~t, J = 7,6 Hz, 2H, Hγ Glu); 2,19-1,98 (2m, 2H, Hβ Glu); 1,98-1,88 (m, 1H, Hγ Ile); 1,51-1,40 (m, 1H, Hβ Ile); 1,38-1,18 (m, 1H, Hβ Ile); 0,94 (d, J = 6,8 Hz, 3H, $CH_3$γ Ile); 0,89 (t, J = 7,2 Hz, 3H, $CH_3$δ Ile) δ ppm

RMN($^{13}C$): 180,0 (s); 178,2 (s); 176,3 (s); 175,5 (s); 171,5 (s); 60,8 (d); 55,9 (d); 52,6 (d); 39,2 (d); 38,3 (t); 32,8 (t); 29,2 (t); 27,6 (t); 17,9 (q); 13,5 (q) δ ppm

ESI-SM/SM : 376,2 ($Y_3$"); 358,2 ($B_3$); 312,5; 261,5; 245,3 ($B_2$); 217,3; 181,3; 172,2; 132,2 ($Y_1$"); 102,0 (($Y_3$'$A_2$)$_1$); 86,0 (($Y_1$'$A_3$)$_1$)

**7. Asp-Glu-Leu**

Rendement : 69% ; pureté : 81,8%

RMN($^1H$,360MHz,$D_2O$) : 4,47 (dd, $J_1$ = 8,0 Hz, $J_2$ = 6,0 Hz, 1H, Hα Glu); 4,39-4,33 (m, 2H, Hα Asp, Hα Leu); 3,20 (dd, $J_1$ = 18,4 Hz, $J_2$ = 5,2 Hz, 1H, Hβ Asp); 2,92 (dd, $J_1$ = 18,4 Hz, $J_2$ = 7,6 Hz, 1H, Hβ Asp); 2,51 (~t, J = 6,0 Hz, 1H, Hγ Glu); 2,19-2,10 (m, 1H, Hβ Glu); 2,07-1,96 (m, 1H, Hβ Glu); 1,73-1,61 (m, 2H, Hβ Leu); 0,95; 0,90 (2d, J = 5,6 Hz, 6H; $CH_3$ Leu) δ ppm

RMN($^{13}C$) : 180,0 (s); 179,4 (s); 176,3 (s); 175,5 (s); 171,6 (s); 55,9 (d); 54,6 (d); 52,7 (d); 42,2 (d); 38,3 (t); 32,8 (t); 29,2 (t); 27,4 (d); 25,1 (q); 23,5 (q) δ ppm

ESI-SM/SM : 376,3 ($Y_3$"); 358,1 ($B_3$); 298,2; 245,1 ($B_2$); 217,2; 181,2; 131,9($Y_1$"); 86,1 (($Y_1$'$A_3$)$_1$)

**8. Glu(Glu-Leu) ou γGlu-Glu-Leu**

Rendement : 77% ; pureté : 90,2%

RMN($^1H$,360MHz,$D_2O$) : 4,42 (~t, J = 5,2 Hz, 1H, Hα Leu); 4,37 (dd, $J_1$ = 9,2 Hz, $J_2$ = 6,4 Hz, 1H, Hα Glu); 4,00 (~t, $J_1$ = 6,0 Hz, 1H, Hα Glu); 2,58-2,47 (m, 4H, Hγ Glu); 2,21-2,16 (m, 2H, Hβ Glu); 2,16-2,07 (m, 1H, Hβ Glu); 2,03-1,94 (m, 1H, Hβ Glu); 1,73-1,62 (m, 3H, Hγ Leu, Hβ Leu); 0,93; 0,88 (2d, J = 5,6 Hz, 6H, $CH_3$ Leu) δ ppm

RMN($^{13}C$) : 179,9 (s); 179,1 (s); 177,2 (s); 176,4 (s); 175,1 (s); 55,9 (d); 55,7 (d); 54,3 (d); 33,9 (t); 32,8 (t); 29,1 (t); 28,7 (t); 27,3 (d); 25,1 (q); 23,4 (t) δ ppm

ESI-SM/SM: 390,5 ($Y_3$"); 372,2 ($B_3$); 354,3; 327,3; 277,2; 261,2 ($Y_2$"); 259,1 ($B_2$); 243,1; 225,1; 213,1; 197,5; 148,2; 132,1 ($Y_1$"); 130,1 ($B_1$); 102,1 ($A_1$)

**9. Glu-Glu-Val**

Rendement : 24% ; pureté : 88,0%

RMN($^1H$,360MHz,$D_2O$): 4,52 (~t, J = 6,4 Hz; 1H, Hα Glu); 4,25 (d, J = 6,0 Hz; 1H, Hα Val); 4,13 (~t, J = 6,4 Hz; 1H, Hα Glu); 2,52 (~dd, 2H, Hγ Glu); 2,24-2,13 (m, 2H, Hγ Glu); 2,13-2,08 (m, 3H, Hγ Glu, Hβ Val); 2,08-1,98 (m, 2H, Hβ Glu) δ ppm

RMN($^{13}C$) : 180,0 (s); 179,2 (s); 178,2 (s); 175,6 (s); 172,0 (s); 61,8 (d); 55,9 (d); 55,1 (d); 32,9 (d); 32,8 (t); 32,1 (t); 29,2 (t); 28,9 (t); 21,3 (q); 20,2 (q) δ ppm

ESI-SM/SM : 376,3 ($Y_3$"); 358,3 ($B_3$); 340,2; 312,3; 294,5; 259,3 ($B_2$); 241,2; 213,3; 195,1; 167,1; 129,2; 118,2 ($Y_1$"); 84,2; 72,1(($Y_1$'$A_3$)$_1$)

**10. Glu-Leu-Glu**

Rendement : 73% ; pureté : 89,7%

RMN($^1H$,360MHz,$D_2O$) : 4,46-4,37 (m, 2H, Hα Glu; Hα Leu); 4,12 (~t, J = 6,4 Hz, 1H, Hα Glu); 2,54 (~t, J = 7,6 Hz, 2H, Hγ Glu); 2,48 (~t, J = 7,6 Hz, 2H, Hγ Glu); 2,27-2,15 (m, 3H, Hβ Glu); 2,04-1,94 (m, 1H, Hβ Glu); 1,73-1,60 (m, 2H, Hβ Leu); 0,95; 0,91 (2d, J = 5,6 Hz, 6H, $CH_3$ Leu) δ ppm

RMN($^{13}C$) : 180,1 (s); 179,3 (s); 178,1 (s); 176,8 (s); 172,0 (s); 55,7 (d); 55,3 (d); 55,1 (d); 42,6 (t); 32,9 (t); 32,1 (t); 29,0 (t); 28,9 (t); 27,2 (d); 24,9 (q), 24,0 (q) δ ppm

ESI-SM/SM : 390,3 ($Y_3$"); 372,5 ($B_3$); 354,5; 326,3; 261,2 ($Y_2$"); 243,4; 215,2; 197,2; 148,1; 130,2 102,1 ($A_1$); 86,3 (($Y_2$'$A_2$)$_1$)

**11. Lys-Asp-Ile**

Rendement : 100% ; pureté : 89,5%

RMN($^1$H,360MHz,$D_2O$) : 4,82 (m/HDO, Hα Asp); 4,25 (d, J = 5,6 Hz, 1H, Hα Ile); 4,06 (~t, J = 6,4 Hz, 1H, Hα Lys); 3,00 (~t, J = 7,2 Hz, 1H, Hε Lys); 2,94 (dd, $J_1$ = 16,8 Hz, $J_2$ = 5,6 Hz, 1H, Hβ Asp); 2,82 (dd, $J_1$ = 16,8 Hz, $J_2$ = 8,4 Hz, 1H, Hβ Asp); 1,96-1,89 (m, 3H, Hβ Lys, Hβ Ile); 1,76-1,68 (m, 2H, Hδ Lys); 1,50-1,40 (m, 3H, Hγ Lys, Hγ Ile); 0,94 (d, J = 6,4 Hz, 3H, $CH_3$γ Ile); 0,89 (t, J = 7,2Hz, 3H, $CH_3$δ Ile) δ ppm

RMN($^{13}$C) : 178,3 (s); 176,9 (s); 174,7 (s); 172,3 (s); 60,9 (d); 55,7 (d); 53,2 (d); 41,9 (t); 39,3 (d); 38,5 (t); 33,3 (t); 29,2 (t); 27,5 (t); 24,1 (t); 18,0 (q); 13,6 (q) δ ppm

DCI($NH_3$)-SM : 375; 357 ; 149; 132

**12. Asp-Ile-Gly**

Rendement : 23% ; pureté : 87,2%

RMN($^1$H,360MHz,$D_2O$) : 4,32 (dd, $J_1$ = 8,4 Hz, $J_2$ = 5,2 Hz, 1H, Hα Asp); 4,25 (d, J = 7,2 Hz, 1H Hα Ile); 3,78 (bs, 2H, Hα Gly); 2,87 (dd, $J_1$ = 16,8 Hz, $J_2$ = 5,2 Hz, 1H, Hβ Asp); 2,71 (dd, $J_1$ = 16,8 Hz, $J_2$ = 8,4 Hz, 1H, Hβ Asp); 1,95-1,86 (m, 1H, Hβ Ile); 1,55-1,45 (m, 1H, Hγ Ile); 1,37-1,14 (m, 1H, Hγ Ile); 0,96 (d, J = 6,8 Hz, 3H, $CH_3$γ Ile); 0,89 (t, J = 6,8 Hz, 3H, $CH_3$δ Ile) δ ppm

RMN($^{13}$C): 175,7 (s); 172,5 (s); 61,7 (d, Cα Ile); 53,6 (d, Cα Asp); 46,1 (t, Cα Gly); 40,1 (t, Cβ Asp); 39,2 (d, Cβ Ile); 27,4 (t, Cγ Ile); 17,7 (q, $CH_3$γ Ile); 13,3 (q, $CH_3$δ Ile) δ ppm

ESI-SM/SM : 304,3 ($Y_3$"); 286,3 ($B_3$); 229,2 ($B_2$); 201,3 ($B_2$); 141,0; 86,2 (($Y_2$'$A_2$)$_1$)

Les dérivés d'acide aminé de structure Lac-X ont été préparés de façon analogue à celle décrite ci-dessus pour les tripeptides, une seule réaction de couplage étant requise dans ce cas, entre l'acide aminé protégé approprié et l'acide (+)-(S)-lactique (Fluka), en présence d'un équiv. de PyBOP® et d'un excès de diisopropyléthylamine. Après purification de l'ester peptidique protégé intermédiaire et l'élimination du groupe protecteur comme il est décrit sous C., on a isolé les dérivés N-(S)-lactoyl-X désirés, où X est un résidu d'acide aminé.

Les composés suivants, intermédiaires et produits finaux, ont été préparés :

**13. N-(S)-Lactoyl-Glu**

RMN($^1$H,360MHz,$D_2O$) : 1,38 (d, 6,8, $H_3C$ de lactoyle), 2,08, 2,27 ($ABX_2Y$, 2 H-$C_\beta$ de Glu), 2,50 (t déformé, 2 H-$C_\gamma$ de Glu), 4,30 (q, 6,8, H-C-O de lactoyle), 4,50 (dd, 10,4,8, H-Cα de Glu) δ ppm

RMN($^{13}$C) : 22,56 (q, $CH_3$ de lactoyle), 28,56 (t), 32,97 (t), 54,54 (d), 70,62 (d), 171,72, 180,00 and 180,63 (3s, C=Q) δ ppm

ESI-SM/SM : 220 (M+1), 202, 184, 174 (M-45), 148 (M-lactoyle), 130, 102, 84, 45

Les caractères analytiques de l'ester dibenzylique intermédiaire, à savoir le N-(S)-lactoyl-Glu(OBzl)-OBzl, étaient les suivants :

RMN($^1$H,360MHz,$D_2O$) : 1,38 (d, 6,8, $H_3C$ de lactoyle), 2,05, 2,25 ($ABX_2Y$, 2 H-Cβ de Glu), 2,40 (ABXY, 2 H-Cγ de Glu), 4,20 (q, 6,8, H-C-O de lactoyle), 4,65 (m, H-Cα de Glu), 5,09 et 5,14 (2s, 2 x 2 H-C-arom.), 7,35 (m, 10 H-arom.) δ ppm

RMN($^{13}$C) : 20,93 (q, $CH_3$ de lactoyle), 27,06 (t), 30,28 (t), 51,27 (d), 66,65 (t), 67,47 (t), 68,24 (d), env. 128,5 (5d), 135,09 et 135,64 (2s, quaternaire arom. C), 171,75, 172,58 et 175,07 (3s, C=O) δ ppm

DCI($NH_3$)-SM : m/e 417 (M+18), 400 (M+1)

**14. N-(S)-Lactoyl-Ala**

RMN($^1$H,360MHz,$D_2O$): 1,36 et 1,40 (2d, 7,2, $H_3C$ de lactoyle et 3 H-$C_\beta$ de Ala), 4,30 (m, H-C-O de lactoyle, H-Cα de Ala) δ ppm

RMN($^{13}$C) : 19,71 (q), 22,48 (q), 52,11 (d), 70,56 (d), 180,02 et 180,5 (2s, 2 C=O) δ ppm

ESI-SM/SM : 162 (M+1), 116 (M-45), 90 (M-lactoyle), 44

Les caractères analytiques de l'ester benzylique intermédiaire, à savoir le N-(S)-lactoyl-Ala-OBzl, étaient les suivants:

RMN($^1$H,360MHz,$D_2O$) : 1,42 et 1,46 (2d, 6,4, $H_3C$ de lactoyle et 3 H-$C_\beta$ de Ala), 3,0 (s large, H-O), 4,26 (q, 6,4, H-C-O de lactoyle), 4,64 (dq, 7,2, 6,4, H-Cα de Ala), 5,18 (AB, 11,2, 2 H-C-arom.), 7,04 (d, 7,2, H-N), 7,35 (m, 5 H-C-arom.) δ ppm

RMN($^{13}$C) : 18,18 (q), 20,89 (q), 47,67 (d), 67,30 (t), 68,26 (d), 128,16, 128,50, 128,67 (3d), 135,27 (s, quaternaire arom. C), 172,98 et 174,43 (2s, C=O) δ ppm

DCI($NH_3$)-SM : 269 (M+18), 252 (M+1)

**15. N-(S)-Lactoyl-Leu**

RMN($^1$H,360MHz,$D_2O$): 1,39 et 1,42 (2d, 5,3, 6 H-$C_\delta$ de Leu), 1,36 (d, 6,6, $H_3C$ de lactoyle), 1,65 (m, 2 H-$C_\beta$,

H-$C_\gamma$), 4,28 (q, 6,6, H-C-O de lactoyle), 4,32 (m, H-Cα de Leu) δ ppm

RMN($^{13}$C) : 22,55 (q), 23,68 (q), 25,28 (q), 27,50 (d), 43,13 (t), 55,33 (d), 70,69 (d), 180,10 et 181,37 (2s, 2 C=O) δ ppm

ESI-SM/SM : 221 (M+18), 204 (M+H)

Les caractères analytiques de l'ester benzylique intermédiaire, à savoir le N-(S)-lactoyl-Leu-OBzl, étaient les suivants:

RMN($^1$H,360MHz,$D_2O$): 0,83 et 0,88 (2d, 2 $C_\delta$ de Leu), 1,20 (d, 6,6, $H_3C$ de lactoyle), 1,57 et 1,70 (2 m, H-$C_\gamma$ et 2 H-$C_\beta$ de Leu), 4,02 (m, H-C-O de lactoyle), 4,40 (m H-Cα de Leu), 5,13 (AB, 11,2, 2 H-C-arom.), 5,51 (d, 5,3 H-O), 7,35 (m, 5 H-C arom.) ,7,90 (d, 7,9, H-N) δ ppm

RMN($^{13}$C) : 21,03 (q,$CH_3$ de Lac), 21,24, 22,68 (2q, 2 $C_\delta$ de Leu), 24,22 (d, $C_\gamma$ de Leu), 39,47 (t), 49,83 (d, Cα de Leu), 65,98 (t, C de Bzl), 66,98 (d, CH de Lac), 127,73, 127,96, 128,35 (3d), 135,89 (s, quaternaire arom. C), 172,14 et 174,57 (2s, C=O) δ ppm

DCI($NH_3$)-SM : 311 (M+18), 295 (M+1)

**16. N-(S)-Lactoyl-Tyr**

Rendement : 43%

RMN($^1$H,360MHz,$D_2O$): 7,14 (d, J = 8,4 Hz, 2H, Ph Tyr); 6,86 (d, J = 8,4 Hz, 2H, Ph Tyr); 4,68 (dd, $J_1$ = 8,4 Hz, $J_2$ = 5,2 Hz, 1H Hα Tyr); 4,21 (q, J = 6,8 Hz, 1H, Hα Lac); 3,21 (dd, $J_1$ = 14,0 Hz, $J_2$ = 5,2 Hz, 1H, Hβ Tyr); 2,98 (dd, $J_1$ = 14,0 Hz, $J_2$ = 8,4 Hz, 1H, Hβ Tyr); 1,22 (d, J = 6,8 Hz, 1H, $CH_3$ Lac) δ ppm

RMN($^{13}$C): 180,1 (s); 177,6 (s); 157,4 (s); 133,6 (d); 131,2 (s); 118,4 (d); 70,6 (d); 56,3 (d); 38,7 (t); 22,4 (q) δ ppm

ESI-SM/SM : 254,2 ($Y_2$"); 208,2 ($A_2$); 182,5 ($Y_1$"); 164,9; 136,1 (($Y_1$'$A_2$)$_1$); 123,0; 45,2

Les caractères analytiques de l'ester benzylique intermédiaire, à savoir le N-(S)-lactoyl-Tyr-OBzl, étaient les suivants:

RMN($^1$H,360MHz,$D_2O$): 9,24 (bs, 1H, OH Tyr); 7,78 (d, J = 8,0 Hz, NH Tyr); 7,40-7,8 (m, 5 H, Bzl); 6,93 (d, J = 8,4 Hz, 2 H, Ph Tyr); 6,74 (d, J = 8,4 Hz, 2H, Ph Tyr); 5,58 (d, J = 6,8 Hz, 1H; OH Lac); 5,14; 5,08 (AB, J = 14,4 Hz, 2H, $CH_2$ Bzl); 4,53 (~dd, $J_1$ = 8,0 Hz, $J_2$ = 6,8 Hz, 1 H Hα Tyr); 4,01-3,93 (m, 1 H Hα Lac); 2,96 (m, 2H, Hβ Tyr); 1,13 (d, J = 6,8 Hz; 3H, $CH_3$ Lac) δ ppm

RMN($^{13}$C) : 174,3 (s); 171,2 (s); 156,0 (s); 135,7 (s); 130,1 (d, Ph Tyr); 128,3; 128,0; 127,9 (3d, Bzl); 126,6 (s); 115,0 (d; Ph Tyr); 66,9 (d, Cα Lac); 66,0 (t, $CH_2$ Bzl); 52,9 (d, Cα Tyr); 35,8 (t, Cβ Tyr); 20,9 (q, $CH_3$ Lac) δ ppm

DCI($NH_3$)-SM : 361 ($M+N_4^+$); 344 ($M+H^+$); 272 (M-Lac); 253

**17. N-(S)-Lactoyl-Met**

La synthèse de ce composé a été légèrement différente de celle des autres analogues. Après une réaction de couplage entre l'hydrochlorure de l'ester méthylique de la L-méthionine (Aldrich) avec l'acide (+)-(S)-lactique, en présence de PyBOP® dans le dichlorométhane et de diisopropyléthylamine, maintenue à 25° à l'aide d'un bain de glace, on a dilué le mélange dans l'acétate d'éthyle et traité comme il est décrit plus haut sous A. Le résidu après l'évaporation sous vide a été filtré sur silica gel avec acétate d'éthyle pour enlever l'oxyde de tripyrrolidinophosphine (sous-produit de la réaction du PyBOP®). Le filtrat a été concentré et purifié par "flash" chromatographie sur silica gel, avec comme éluant hexane/acétate d'éthyle 35:65, suivi de hexane/acétate d'éthyle 3:7 et enfin acétate d'éthyle. Les fractions chromatographiquement pures (CCM) ont été combinées et concentrées pour fournir l'ester méthylique intermédiaire, à savoir le N-(S)-lactoyl-Met-$OCH_3$, ayant les caractères analytiques suivants :

RMN($^1$H,360MHz,$D_2O$) : 1,43 (d, 6,4, $H_3C$ de lactoyle), 2,02, 2,20 (ABX$_2$Y, 2 H-$C_\beta$ de Met), 2,10 (s, 3 H-C-S), 2,53 (t, 7,2, 2 H-$C_\gamma$ de Met), 3,22 (s large, H-O), 4,27 (q, 6,4, H-C-O de lactoyle), 4,71 (m, H-Cα de Met), 7,2 (d, 9,2, H-N) δ ppm

RMN($^{13}$C) : 15,52 (q), 21,04 (q, $CH_3$ de lactoyle), 30,03 (t), 31,63 (t), 51,12 (d), 52,66 (q), 68,24 (d), 172,5, 175,0 (2s, C=O) δ ppm

DCI($NH_3$)-SM : 3m/e 253 (M+18), 236 (M+1)

L'ester méthylique intermédiaire (10 mmole) a ensuite été saponifié à l'aide d'hydroxyde de sodium (21 mmole) dans un mélange d'eau (20 ml) et d'éthanol (10 ml). L'éthanol a été évaporé sous vide et la phase aqueuse diluée à l'eau (100 ml) et extraite deux fois à l'éther. On a ajusté le pH de la phase aqueuse à 5,5 et lyophilisé. Après avoir déssalé sur une résine Dowex® 50Wx8 (Fluka) on a obtenu le N-(S)-lactoyl-Met désiré sous forme d'une huile jaune visqueuse. Le pH de cette dernière a été ajusté à 5,5 avec NaOH 0,2 N pour obtenir le produit désiré sous forme d'une poudre cristalline dont les caractères analytiques étaient les suivants :

RMN($^1$H,360MHz,$D_2O$): 1,38 (d, 6,8, $H_3C$ de lactoyle), 2,02, 2,14 (ABX$_2$Y, 2 H-$C_\beta$ de Met), 2,12 (s, 3 H-C-S),

2,55 (m, 2 H-$C_\gamma$ de Met), 4,28 (q, 6,8, H-C-O de lactoyle), 4,33 (dd, 8,8,4,8, H-Cα de Met) δ ppm
RMN($^{13}C$) : 17,06 (q), 22,49 (q, $CH_3$ de lactoyle), 32,46 (t), 33,92 (t), 56,55 (d), 70,60 (d), 179,75 et 180,99 (2s, C=O) δ ppm
ESI-SM/SM : m/z 222: 222 (M+1), 205, 176 (M-45), 174, 150 (M-lactoyle), 128, 104, 61, 56

L'invention sera maintenant décrite de façon plus détaillée à l'aide des exemples suivants, dans lesquels les abréviations ont le sens usuel dans l'art. Ces exemples représentent des modes d'exécution typiques de l'invention qui ne sauraient pas être interprétés de façon restrictive, notamment en ce qui concerne les proportions relatives ou absolues des ingrédients cités.

Exemple 1

Préparation de compositions aromatisantes

On a préparé deux solutions de base en ajoutant à de l'eau de source les ingrédients suivants, dans les proportions indiquées (poids d'ingrédient en mg par litre de solution) :

| Ingrédient | Solution | |
|---|---|---|
| | A | B |
| $Na_2PO_4$ | 67,5 | 67,5 |
| CaO | 130,0 | 130,0 |
| KCl | 65,0 | 65,0 |
| MgO | 16,0 | 16,0 |
| $NH_4Cl$ | 184,5 | 184,5 |
| NaCl | 221,5 | 221,5 |
| NaOH | 189,5 | 189,5 |
| HCl | 219,0 | 219,0 |
| Acide lactique | 492,0 | 492,0 |
| Arôme* | - | 50,0 |
| Total | 1585,0 | 1635,0 |

* 504262 TH, type fromage, origirie : Firmenich SA

A l'aide de ces solutions de base, on a préparé des solutions nouvelles aromatisées, en ajoutant à l'une ou l'autre de ces solutions A ou B à raison de 0,3% en poids, par rapport au volume de solution, des composés mentionnés au tableaux ci-après, ainsi que du NaOH 0,2 M en quantité nécessaire (environ 2 à 5 ml) pour tamponner le pH de la solution finale à environ 5,5.

TABLEAU I -

| Solutions préparées avec la solution de base A | |
|---|---|
| Solution | Ingrédient |
| C | Glu-Glu-Leu |
| D | Leu-Glu-Glu |
| E | Glu-Glu-Ile |
| F | Glu-Glu-Val |
| G | γGlu-Glu-Leu |
| H | Glu-Asp-Ile |
| I | Glu-Asp-Phe |
| J | Asp-Glu-Ile |
| K | Asp-Glu-Leu |
| L | Glu-Leu-Glu |
| M | Lac-Glu |
| N | Lac-Leu |
| O | Lac-Ala |

TABLEAU I - (suite)

| Solutions préparées avec la solution de base A | |
|---|---|
| Solution | Ingrédient |
| P | Lac-Met |

TABLEAU II -

| Solutions préparées avec la solution de base B | |
|---|---|
| Solution | Ingrédient |
| C' | Glu-Glu-Leu |
| D' | Leu-Glu-Glu |
| E' | Glu-Glu-Ile |
| F' | Glu-Glu-Val |
| G' | γGlu-Glu-Leu |
| H' | Glu-Asp-Ile |
| I' | Glu-Asp-Phe |
| J' | Asp-Glu-Ile |
| K' | Asp-Glu-Leu |
| L' | Glu-Leu-Glu |
| M' | Lac-Glu |
| N' | Lac-Leu |
| O' | Lac-Ala |
| P' | Lac-Met |

Les solutions nouvelles ainsi obtenues ont ensuite été évaluées à l'aveugle par un panel d'experts aromaticiens en deux tests séparés.

Le premier de ces tests avait pour objet la description des propriétés organoleptiques des solutions C à P et leur comparaison avec celles de la solution de base A. Les résultats de ce test sont indiqués au Tableau III ci-après.

TABLEAU III -

| Evaluation par rapport à la solution A | |
|---|---|
| Solution | Propriétés organoleptiques |
| C | excellent "mouthfeel", note légèrement boisée et moisie, rond, doux |
| D | un peu moins de "mouthfeel" que C, neutre |
| E | "mouthfeel", note éther, fruitée |
| F | arrondi, huileux |
| G | forte note moisie, "mouthfeel" |
| H | crémeux, arrondi, légèrement amer |
| I | plus umami que H, "mouthfeel" |
| J | poudreux, carton |
| K | légèrement salé, umami et amer, "mouthfeel" |
| L | légèrement salé, umami et doux |
| M | note marine iodée, "mouthfeel", odeur caramel, fraîche |
| N | légèrement amer, "mouthfeel" |
| O | "mouthfeel" mais légèrement moins que M, moins iodé aussi |
| P | arrondi, fromage, produit laitier, presque trop dosé, odeur terreuse, géranium |

D'une façon générale, il a été trouvé que toutes les solutions C à P possédaient un goût plus arrondi et provoquaient une sensation en bouche riche nettement accrue par rapport à celle de la solution de base A. Les aromaticiens ont indiqué une préférence marquée pour les solutions C et D, parmi les solutions C à L contenant des tripeptides, pour leur rondeur et "mouthfeel" plus accentués et aussi pour leur effet organoleptique qui rappelle plus

celui conféré par le MSG (monosodium glutamate).

D'autre part, parmi les solutions M à P, il est apparu que les solutions M et O provoquaient une sensation en bouche plus riche, la solution P possédant aussi un caractère de type fromage très apprécié.

Les résultats du deuxième test comparatif sont résumés au Tableau IV. Les aromaticiens devaient se prononcer sur les propriétés organoleptiques des solutions C' à P' par rapport à celles de la solution B qui possédait un goût de fromage typique imparti par l'arôme volatile, mais très peu de notes crémeuses et de "mouthfeel".

TABLEAU IV -

| Evaluation par rapport à la solution B | |
|---|---|
| Solution | Propriétés organoleptiques |
| C' | excellent "mouthfeel", rehausse les notes fromage, effet neutre sur le goût imparti par les volatiles |
| D' | semblable à C', notes type fromage et beurre nettement exhaltées, goût très arrondi |
| E' | plus de "mouthfeel" mais effet moins marqué que C' et D' |
| F' | goût plus arrondi, plus fromage fondu, légère note brulée, "mouthfeel" semblable C' et D' |
| G' | plus de "mouthfeel", note un peu phénolique |
| H' | effet crémeux accru |
| I' | remplit la bouche, effet umami très prononcé |
| J' | goût plus salé |
| K' | plus d'impact dans la bouche, "mouthfeel", plus arrondi et salé |
| L' | goût plus arrondi et salé, exalte les volatiles, notes grasses aussi rehaussées |
| M' | plus d'impact et de volume dans la bouche, goût plus frais, l'odeur a plus de montant |
| N' | plus de "mouthfeel" |
| O' | plus de "mouthfeel", trop dosé, couvre les volatiles, goût durable dans la bouche, l'odeur a plus de montant |
| P' | dosage trop fort, goût beaucoup plus crémeux, plus durable, excellent "mouthfeel" |

De l'avis des aromaticiens, toutes les solutions nouvelles ainsi obtenues avaient un goût plus volumineux et durable dans la bouche que la solution de base B, l'addition des composés cités au Tableau II ayant servi d'une façon générale à renforcer le goût de fromage de cette dernière et à lui conférer une consistance plus crémeuse et ample. Parmi toutes les solutions contenant des tripeptides, les solutions C', D'et F' ont été particulièrement appréciées pour leur "mouthfeel" et leur caractère umami rappelant l'effet que l'on peut obtenir avec le MSG. Selon les aromaticiens, cet effet de type MSG obtenu avec ces tripeptides pourrait se voir encore renforcé en les utilisant en combinaison avec l'acide succinique. Parmi ces trois solutions nouvelles, la solution C' a été la plus préférée, son goût étant très équilibré, avec un bon "mouthfeel", mais sans que l'on observe de distortion du profil de l'arôme fromage.

Par ailleurs, les solutions M' et O' ont été préférées pour l'ampleur et l'impact de leur goût, et la solution P' a été jugée particulièrement intéressante pour des aromatisations de type fromage. Dans le cas du composé Lac-Ala présent dans la solution O', il a été trouvé que son effet organoleptique devenait encore meilleur si ce composé était dosé à 0,075 % en poids au lieu de 0,3 %, les volatiles produisant alors leur effet maximum et la solution ayant toujours un excellent "mouthfeel". De même, le composé Lac-Met dans la solution P' était à son mieux à des concentrations inférieures aux 0,3 % cités plus haut. On a en effet constaté que même utilisé à 0,15 % ou encore à 0,1 % en poids il conférait toujours une bonne crémosité et ampleur au goût de la solution de base, le rendant plus durable et renforçant mieux les notes volatiles de l'arôme fromage.

Exemple 2

Préparation de compositions aromatisantes

On a préparé une composition aromatisante de base en mélangeant les acides aminés suivants dans les proportions indiquées (parties en poids):

| Ingrédient | Parties en poids |
|---|---|
| L-Alanine | 2,98 |
| Glycine | 3,72 |
| L-Valine | 7,87 |

(suite)

| Ingrédient | Parties en poids |
|---|---|
| L-Thréonine | 0,98 |
| L-Sérine | 4,90 |
| L-Leucine | 9,91 |
| L-Isoleucine | 7,34 |
| L-Cystéine | 0,50 |
| L-Proline | 9,72 |
| L-Méthionine | 2,23 |
| L-Asparagine | 3,43 |
| Acide L-Aspartique | 3,43 |
| L-Phénylalanine | 5,25 |
| L-Ornithine | 0,12 |
| Acide L-Glutamique | 15,95 |
| L-Glutamine | 11,83 |
| L-Lysine | 8,08 |
| L-Tyrosine | 1,06 |
| L-Histidine | 0,48 |
| L-Tryptophane | 0,22 |
| Total | 100,00 |

On a préparé une solution aromatisante de base X en ajoutant à la solution B, décrite dans l'Exemple 1, 0,2 % en poids, par rapport au volume de la solution, de cette composition aromatisante à base d'acides aminés. Le pH de cette solution a été ajusté à environ 5,5 à l'aide de NaOH 0,2 M.

Avec cette solution de base X, qui possédait une note gustative de type fromage, un peu moisie et salée, et un certain "mouthfeel", aussi plus de montant et volume que la solution B, on a préparé des solutions aromatisées nouvelles, en ajoutant à raison de 0,1 % en poids, par rapport au volume de la solution, des tripeptides indiqués au Tableau ci-après, ainsi que du NaOH 0,2 M en quantité nécessaire (environ 2 à 5 ml) pour tamponner le pH de la solution finale à environ 5,5.

TABLEAU V -

| Solutions préparées avec la solution de base X | |
|---|---|
| Solution | Ingrédient |
| C" | Glu-Glu-Leu |
| D" | Leu-Glu-Glu |
| E" | Glu-Glu-Ile |
| F" | Glu-Glu-Val |
| G" | γGlu-Glu-Leu |
| H" | Glu-Asp-Ile |
| I" | Glu-Asp-Phe |
| J" | Asp-Glu-Ile |
| K" | Asp-Glu-Leu |
| L" | Glu-Leu-Glu |

Ces solutions aromatisées ont ensuite été évaluées à l'aveugle par un panel d'experts aromaticiens qui devaient décrire leur goût et les évaluer par rapport à la solution de base X. Le Tableau ci-après résume les résultats de ces évaluations.

TABLEAU VI -

| Evaluation par rapport à la solution X | |
|---|---|
| Solution | Propriétés organoleptiques |
| C" | excellent "mouthfeel", plus de rondeur, umami, remplit la bouche de façon remarquable, impression de salinité |
| D" | "mouthfeel" trop prononcé, volatiles un peu écrasés, dosage à revoir, mais crémosité et volume nettement accrus, odeur plus intense que solution de base |
| E" | goût plus arrondi |
| F" | goût plus arrondi, salé |
| G" | plus de "mouthfeel", note un peu moins phénolique |
| H" | goût plus crémeux, moins fromage |
| I" | remplit plus la bouche, plus de "mouthfeel", rondeur, umami |
| J" | goût plus arrondi |
| K" | goût plus arrondi |
| L" | goût bien équilibré, sensation d'ampleur |

Une préférence nette pour les solutions C", D" et L" est ressortie de ces essais, malgré le fait que le dosage n'était pas idéal dans la solution D". De l'avis des aromaticiens, la composition aromatisante à base d'acides aminés avait ajouté de la plénitude au goût de la solution B, mais c'est l'addition des tripeptides, en particulier les composés Glu-Leu-Glu, Leu-Glu-Glu et Glu-Glu-Leu, qui apporte l'ampleur idéale, notamment pour des applications de type fromage et laitier en général. L'effet de ces composés, en combinaison avec le mélange d'amino acides était particulièrement fort du point de vue du "mouthfeel" ou sensation en bouche de la solution, mais quand même distinct de celui du MSG, moins bouillon, plutôt "umami neutre" pour ainsi dire, ce qui les rend d'un usage plus général.

Exemple 3

Aromatisation de soupes instantanées de type légumes

On a préparé des échantillons d'une soupe aromatisée en ajoutant à un potage en sachets de type instantané du commerce, type Royco® tomate, persil (origine : Fralib, France), des tripeptides selon l'invention.
Pour ce faire, on a préparé des solutions desdits tripeptides (50 mg) dans l'eau de source, auxquelles on a ajouté quelques gouttes de NaOH 0,2 M pour apporter le pH à environ 5,0 (volume final 5 ml) et, le cas échéant, lyophilisé la solution pour obtenir une poudre de tripeptide, ou bien utilisé la solution telle quelle.
Les soupes ont ensuite été préparées selon les instructions du fabricant, en diluant un quart de sachet Royco ® (environ 4,34 g de poudre homogène) dans de l'eau bouillante (soupe référence) ainsi que les ingrédients indiqués ci-après:

| Ingrédient | Soupe | | | | |
|---|---|---|---|---|---|
| | Référence | A | B | C | MSG |
| Eau bouillante | 50 ml | 50 ml | 45 ml | 45 ml | 50 ml |
| Poudre Royco® | 1/4 sachet | 1/4 sachet | 1/4 sachet | 1/4 sachet | 1/4 sachet |
| Glu-Glu-Leu | - | 50 mg (lyophilisé) | - | - | - |
| Leu-Glu-Glu | - | - | 5 ml (solution pH 5) | - | - |
| Glu-Asp-Phe | - | - | - | 5 ml (solution pH 5) | - |
| MSG | - | - | - | - | 50 mg |

Les soupes bouillantes ainsi préparées ont ensuite été évaluées à l'aveugle par un panel d'experts aromaticiens. De l'avis de ces derniers, toutes les soupes avaient une odeur moins fruitée que celle de la référence, la soupe MSG ayant en outre une odeur plus bouillon.
La soupe A possédait un goût plus arrondi et plus doux, aussi moins acide que la soupe de référence et plus de volume, sans que l'odeur ait été sensiblement affectée, tout l'effet étant ressenti au niveau de la bouche.
Une préférence marquée a été indiquée pour la soupe B, dont le goût était jugé plus arrondi et l'impact encore meilleur que celui de la précédente, avec un goût tomate plus durablement ressenti dans la bouche.

La soupe MSG a été préférée à la soupe C, son impact étant similaire à celui de la soupe B, point de vue amplitude, mais couvrant trop le caractère tomate, ce qui la rendait d'un goût moins naturel et authentique que celui de la soupe B.

Selon les aromaticiens, ceci illustrait bien le fait déjà remarqué auparavant que le MSG a un effet umami de type bouillon, alors que les tripeptides de l'invention, notamment Leu-Glu-Glu et Glu-Glu-Leu, ont un effet umami neutre, affectant moins les volatiles.

Quant à la soupe C, son odeur était plus de type tomate concentrée, ce qui a été apprécié, les notes épicées de type aneth et carvone étant cependant exaltées, ce qui provoquait une légère distortion du caractère tomate original. De l'avis des aromaticiens, le tripeptide ajouté dans ce cas, à savoir Glu-Asp-Phe, provoquait un effet organoleptique qui se révèle idéal pour utilisation dans une crème d'asperge, par exemple, mais qui était moins apprécié que les deux autres cités ci-dessus pour un effet de type tomate.

Exemple 4

Aromatisation de bouillons de volaille instantanés

On a préparé des échantillons d'un bouillon aromatisé, à l'aide d'un cube bouillon de poule de type Knorr®, en ajoutant des tripeptides, de façon analogue à celle décrite à l'Exemple 3.

Pour ce faire, on a préparé des solutions desdits tripeptides (50 mg) dans l'eau de source, auxquelles on a ajouté quelques gouttes de NaOH 0,2 M pour apporter le pH à environ 5,0 (volume final 5 ml) et, le cas échéant, lyophilisé la solution pour obtenir une poudre de tripeptide, ou bien utilisé la solution telle quelle.

Les soupes ont ensuite été préparées en diluant le cube de type Knorr® dans 500 ml d'eau bouillante pour préparer un bouillon de base, auquel on a ensuite ajouté les ingrédients indiqués ci-après :

| Ingrédient | Soupe | | | | |
|---|---|---|---|---|---|
| | Référence | A | B | C | MSG |
| Bouillon de base | 50 ml | 50 ml | 45 ml | 45 ml | 50 ml |
| Glu-Glu-Leu | - | 50 mg (lyophilisé) | - | - | - |
| Leu-Glu-Glu | - | - | 5 ml (solution pH 5) | - | - |
| Glu-Asp-Phe | - | - | - | 5 ml (solution pH 5) | - |
| MSG | - | - | - | - | 50 mg |

Les bouillons bouillants ainsi préparés ont ensuite été évalués à l'aveugle par un panel d'experts aromaticiens.

De leur avis, le bouillon A possédait une odeur excellente et un goût où la note bouillon était nettement renforcée et était plus durable que celle du bouillon de base ou référence. Son goût était durable et arrondi, bien complet. Ce bouillon a d'ailleurs été préféré par tous les aromaticiens.

Le bouillon B avait un goût jugé plus arrondi mais un peu creux, avec plus de volume mais un peu moins de caractère que le bouillon de base. Le bouillon MSG lui était en fait préféré pour son goût plus viandeux et plus ample, mieux arrondi.

Des essais similaires ont été effectués avec un cube de bouillon de poule mais du type Maggi ® "light", avec 50 % de matières grasses en moins. Dans ce cas particulier, c'est le tripeptide Leu-Glu-Glu qui a conféré le meilleur effet organoleptique, fournissant un bouillon dont le goût était plus velouté, plus juteux-jus de viande et plus arrondi, l'effet étant jugé tout à fait comparable à celui obtenu avec le MSG.

Exemple 5

Aromatisation de margarines allégées

On a ajouté à 20 g d'une margarine "low-fat" du commerce (Mabona minima, Migros, Suisse, 25 % de matières grasses) respectivement 20 mg de tripeptide Glu-Glu-Leu (margarine A), 20 mg de tripeptide Leu-Glu-Glu (margarine B) et 20 mg de MSG (margarine MSG).

Les margarines nouvelles ainsi obtenues ont ensuite été évaluées à l'aveugle par un panel d'experts aromaticiens et comparées à la margarine du commerce, dont le goût a été décrit par les aromaticiens comme étant crémeux, poudre de lait, avec une consistance gélatineuse et peu durable dans la bouche.

Le résultat de cette évaluation a montré une nette préférence des aromaticiens pour la margarine B, suivie de près de la margarine A. Cette dernière possédait déjà un goût beaucoup plus durable et plein dans la bouche que

celui de la margarine du commerce, la note poudre de lait étant complètement couverte et l'impression étant d'une richesse accrue en matière grasse. Mais la margarine B était d'une qualité encore meilleure, plus crémeuse et onctueuse, plus substantive, l'arôme étant mieux respecté, les notes beurre et margarine ressortant plus naturelles et l'effet global étant encore plus équilibré.

Ces effets étaient encore parfaitement identifiables même à une moindre concentration de tripeptide, de l'ordre de 0,05 % en poids, par rapport au poids de la margarine.

Quant à la margarine MSG, son goût a été jugé trop bouillon, bien que l'effet mouthfeel soit comparable à celui de la margarine B. La note bouillon était en fait si forte qu'elle détruisait complètement l'effet organoleptique global.

Exemple 6

Compositions aromatisantes de type poisson ou fruits de mer

Pour préparer des solutions aromatisées de base on a ajouté à une solution aqueuse saline à 0,5% de NaCl, respectivement un arôme de type poisson fumé (502.983 A ; origine : Firmenich SA, Genève, Suisse; solution A), un arôme de type crabe (504.483 A ; origine : Firmenich SA, Genève, Suisse ; solution B), un arôme de type calamar (503.044 A ; origine : Firmenich SA, Genève, Suisse ; solution C), et un arôme de type crevette (503.042 A ; origine : Firmenich SA, Genève, Suisse; solution D), tous ces arômes ayant été additionnés dans une proportion de 0,01% en poids.

On a ensuite ajouté à ces solutions de base 0,3% en poids du tripeptide Glu-Glu-Leu ou 0,03% en poids du dérivé Lac-Met selon l'invention pour obtenir des solutions aromatisées nouvelles, lesquelles ont été évaluées à l'aveugle, par rapport aux solutions de base respectives, par un panel d'experts aromaticiens.

Le résultat de ces évaluations a montré que le composé Glu-Glu-Leu renforçait le "mouthfeel" et apportait plus de volume aux arômes de base, effet qui était particulièrement marqué sur les arômes de type poisson fumé, crabe et crevette.

D'autre part, le dérivé Lac-Met avait arrondi le goût et imparti plus de corps, d'ampleur, à la solution contenant l'arôme de type poisson fumé.

Exemple 7

Compositions aromatisantes de type fruits exotiques

On a ajouté à de l'eau sucrée acidulée (10% de sucre, 0,1% d'acide citrique) à raison de 0,01% en poids de, respectivement, un arôme de type ananas (502.434 A ; origine: Firmenich SA, Genève, Suisse), un arôme de type mangue (55.508 A ; origine : Firmenich SA, Genève, Suisse), un arôme de type fruit de la passion (502.010 A ; origine : Firmenich SA, Genève, Suisse), et d'un arôme de type goyave (503.741 A ; origine : Firmenich SA, Genève, Suisse) pour préparer des solutions de base.

A ces quatre solutions de base, on a ensuite ajouté 0,3% en poids de Glu-Glu-Leu pour préparer des solutions nouvelles aromatisées selon l'invention, lesquelles ont été comparées à l'aveugle avec les solutions de base correspondantes, par un panel d'experts aromaticiens.

De l'avis de ces derniers, les solutions nouvelles, en particulier celles au goût d'ananas et mangue, possédaient une note gustative plus chair du fruit et plus pulpeuse que les solutions de base correspondantes, et étaient donc préférées à ces dernières.

Exemple 8

Aromatisation de chips

On a préparé des compositions aromatisantes en poudre A et B à l'aide des ingrédients suivants.

| Ingrédient | Composition (% en poids) | |
|---|---|---|
| | A | B |
| Arôme de type tomate * | 0,20 | 0,20 |
| Sel | 14,40 | 14,40 |

*728.418 AP ; origine : Firmenich SA, Genève, Suisse

(suite)

| Ingrédient | Composition (% en poids) | |
|---|---|---|
| | A | B |
| Sucre | 32,00 | 32,00 |
| Acide malique | 1,60 | 1,60 |
| Acétate de sodium | 3,20 | 3,20 |
| Diacétate de sodium | 3,20 | 3,20 |
| Oleorésine de paprika | 1,20 | 1,20 |
| Poudre d'oignon | 4,80 | 4,80 |
| Poudre d'ail | 0,80 | 0,80 |
| MSG | 9,60 | -- |
| Maltodextrine | 29,00 | 34,60 |
| Glu-Glu-Leu | -- | 4,00 |
| Total | 100,00 | 100,00 |

On a ensuite aromatisé deux lots séparés de pommes chips à l'aide de ces deux compositions, selon des techniques d'enrobage conventionnelles.

Lors de l'évaluation à l'aveugle des deux lots de chips ainsi aromatisés par un panel d'experts aromaticiens, ces derniers ont indiqué que les deux lots de chips possédaient un bon mouthfeel et un impact dans la bouche qui était tout à fait comparable du point de vue de l'intensité.

Exemple 9

Aromatisation d'une sauce au fromage

On a préparé une sauce au fromage de base, à l'aide des ingrédients suivants :

| Ingrédient | Parties en poids |
|---|---|
| Eau | 300,00 |
| Farine | 9,1 |
| Amidon modifié | 5,0 |
| Graisse | 4,0 |
| Lait en poudre | 6,0 |
| Poudre d'oignon | 0,3 |
| Poivre | 0,1 |
| Muscade | 0,1 |
| Moutarde en poudre | 0,3 |
| Sel | 3,1 |
| Poudre de fromage * | 6,6 |
| Poudre de fromage ** | 3,2 |

* type ceddar, 871009/P ; origine : Firmenich NV, Maasmechelen, Belgique

** type mozzarella, 871013/P ; origine : Firmenich NV, Maasmechelen, Belgique

Après avoir bien mélangé les ingrédients cités ci-dessus, on a préparé une sauce de façon conventionnelle, en ajoutant de l'eau dans la quantité appropriée et en chauffant jusqu'à ébullition, tout en mélangeant bien pour obtenir une sauce homogène.

A cette sauce de base prête à la consommation on a ensuite ajouté 0,25% en poids du tripeptide Glu-Glu-Leu pour obtenir une sauce nouvelle aromatisée selon l'invention.

La sauce de base et cette sauce nouvelle ont ensuite été évaluées à l'aveugle par un panel d'experts aromaticiens. Ces derniers ont indiqué une nette préférence pour la sauce nouvelle. A leur avis, l'addition du tripeptide susmentionné à la sauce de base, dont le goût original était légèrement amer, épicé, croûte de fromage, gruyère, lui avait conféré une note plus crémeuse et viandeuse et avait arrondi et adouci son impact dans la bouche.

## Revendications

1. Utilisation à titre d'ingrédient aromatisant :

   a) d'un ou plusieurs tripeptides contenant un seul résidu d'acide aminé hydrophobe et au moins un résidu d'acide aminé acide, étant entendu que les tripeptides Glu-Asp-Val, (Glu,Ile)-Asp, Glu-Gly-Ala et Ile-Glu-Glu sont exclus ; et/ou
   b) d'un ou plusieurs dérivés d'acide aminé ayant une structure de type N-lactoyl-X, où X représente un résidu d'acide aminé.

2. Utilisation selon la revendication 1, **caractérisée en ce qu'**on ajoute à un produit comestible pour l'homme ou les animaux, ou à un produit pharmaceutique, un ou plusieurs tripeptides et/ou un ou plusieurs dérivés d'acide aminé tels que définis à la revendication 1, en quantité suffisante pour impartir, améliorer ou augmenter la sensation en bouche ou "mouthfeel" dudit produit

3. Utilisation selon la revendication 1 ou 2, **caractérisée en ce que** le tripeptide contient deux résidus d'acide aminé acides.

4. Utilisation selon l'une des revendications 1 à 3, **caractérisée en ce que** le ou les résidus acides du tripeptide sont des résidus glutamyle.

5. Utilisation selon la revendication 4, **caractérisée en ce que** le tripeptide est sélectionné parmi les Glu-Glu-Leu, Glu(Glu-Leu), Leu-Glu-Glu, Glu-Asp-Phe, Glu-Glu-Ile, Asp-Glu-Leu et Glu-Leu-Glu.

6. Utilisation selon la revendication 1 ou 2, **caractérisée en ce que** le dérivé d'acide aminé est sélectionné parmi les Lac-Glu, Lac-Ala et Lac-Met.

7. Utilisation selon l'une des revendications précédentes, **caractérisée en ce que** le tripeptide et/ou le dérivé d'acide aminé est en mélange avec un ou plusieurs acides aminés.

8. Composition aromatisante contenant à titre d'ingrédient aromatisant :

   a) un ou plusieurs tripeptides contenant un seul résidu d'acide aminé hydrophobe et au moins un résidu d'acide aminé acide ; et/ou
   b) un ou plusieurs dérivés d'acide aminé ayant une structure de type N-lactoyl-X, où X représente un résidu d'acide aminé, ensemble avec au moins un coingrédient aromatisant, un solvant ou un adjuvant d'usage courant, étant entendu que les hydrolysats de poisson contenant les tripeptides Glu-Asp-Val, (Glu,Ile)-Asp, Glu-Gly-Ala et Ile-Glu-Glu sont exclus.

9. Composition aromatisante selon la revendication 8, **caractérisée en ce qu'**elle contient en plus un ou plusieurs acides aminés.

10. Produit comestible pour l'homme ou les animaux, contenant à titre d'ingrédient aromatisant :

    a) un ou plusieurs tripeptides contenant un seul résidu d'acide aminé hydrophobe et au moins un résidu d'acide aminé acide ; et/ou
    b) un ou plusieurs dérivés d'acide aminé ayant une structure de type N-lactoyl-X, où X représente un résidu d'acide aminé,

    ou une composition selon la revendication 8 ou 9.

11. Produit comestible selon la revendication 10, sous forme d'un beurre ou d'une margarine, d'une mayonnaise, d'un chocolat, d'une crème ou d'une glace, d'une soupe, d'une sauce, d'un plat prêt à consommer, d'un biscuit doux ou salé, d'un dessert ou d'une boisson.

12. Composé constitué par :

    a) un tripeptide contenant un seul résidu d'acide aminé hydrophobe et au moins un résidu d'acide aminé acide,

étant entendu que les tripeptides Glu-Asp-Val, (Glu,Ile)-Asp, Ile-Glu-Glu, Glu-Gly-Ala, Glu-Arg-Pro, Glu-Glu-Ala, Glu-His-Pro, Glu-Asn-Trp, Glu-Gln-Trp, Glu-Leu-Gly et Asp-Glu-Leu sont exclus ; ou
b) un dérivé d'acide aminé ayant une structure de type N-lactoyl-X, où X représente un résidu d'acide aminé, étant entendu que les dérivés Lac-Leu, Lac-Ile, Lac-Ala, Lac-Val, Lac-Gly et Lac-Phe sont exclus.

**Patentansprüche**

**1.** Verwendung als Aromastoff:

a) von einem oder mehreren Tripeptiden, welche einen einzigen hydrophoben Aminosäurerest und mindestens einen sauren Aminosäurerest enthalten, wobei die Tripeptide Glu-Asp-Val, (Glu,Ile)-Asp, Glu-Gly-Ala und Ile-Glu-Glu ausgenommen sind; und/oder

b) von einem oder mehreren Aminosäurederivaten mit einer Struktur vom Typ N-Lactoyl-X, worin X für einen Aminosäurerest steht.

**2.** Verwendung nach Anspruch 1, **dadurch gekennzeichnet, daß** einem für den Verzehr durch Mensch oder Tier geeigneten Produkt oder einem pharmazeutischen Produkt ein oder mehrere Tripeptide und/oder ein oder mehrere Aminosäurederivate gemäß der Definition in Anspruch 1 in einer Menge zugegeben werden, die ausreicht, um die sensorische Wahrnehmung des Produkts im Mund oder das "Mouthfeel" zu verleihen, zu verbessern oder zu verstärken.

**3.** Verwendung nach Anspruch 1 oder 2, **dadurch gekennzeichnet, daß** das Tripeptid zwei saure Aminosäurereste enthält.

**4.** Verwendung nach einem der Ansprüche 1 bis 3, **dadurch gekennzeichnet, daß** es sich bei dem bzw. den sauren Rest(en) des Tripeptids um Glutamylreste handelt.

**5.** Verwendung nach Anspruch 4, **dadurch gekennzeichnet, daß** das Tripeptid unter Glu-Glu-Leu, Glu(Glu-Leu), Leu-Glu-Glu, Glu-Asp-Phe, Glu-Glu-Ile, Asp-Glu-Leu und Glu-Leu-Glu ausgewählt ist.

**6.** Verwendung nach Anspruch 1 oder 2, **dadurch gekennzeichnet, daß** das Aminosäurederivat unter Lac-Glu, Lac-Ala und Lac-Met ausgewählt ist.

**7.** Verwendung nach einem der vorhergehenden Ansprüche, **dadurch gekennzeichnet, daß** das Tripeptid und/oder das Aminosäurederivat in Mischung mit einer oder mehreren Aminosäuren vorliegt.

**8.** Aromatisierende Zusammensetzung, enthaltend als Aromastoff:

a) ein oder mehrere Tripeptide, welche einen einzigen hydrophoben Aminoäurerest und mindestens einen sauren Aminosäurerest enthalten; und/oder

b) ein oder mehrere Aminosäurederivate mit einer Struktur vom Typ N-Lactoyl-X, worin X für einen Aminosäurerest steht,

zusammen mit mindestens einem Co-Aromastoff, einem gängigen Lösungsmittel oder Hilfsstoff, wobei Fischhydrolysate, welche die Tripeptide Glu-Asp-Val, (Glu,Ile)-Asp, Glu-Gly-Ala und Ile-Glu-Glu enthalten, ausgenommen sind.

**9.** Aromatisierende Zusammensetzung nach Anspruch 8, **dadurch gekennzeichnet, daß** sie des weiteren eine oder mehrere Aminosäuren enthält.

**10.** Für den Verzehr durch Mensch oder Tier geeignetes Produkt, welches als Aromastoff enthält:

a) ein oder mehrere Tripeptide, welche einen einzigen hydrophoben Aminosäurerest und mindestens einen sauren Aminosäurerest enthalten; und/oder

b) ein oder mehrere Aminosäurederivate mit einer Struktur vom Typ N-Lactoyl-X, worin X für einen Aminosäurerest steht,

oder eine Zusammensetzung nach Anspruch 8 oder 9.

**11.** Für den Verzehr geeignetes Produkt nach Anspruch 10 in Form einer Butter oder einer Margarine, einer Mayonnaise, einer Schokolade, einer Creme oder eines Speiseeises, einer Suppe, einer Sauce, eines Fertiggerichtes, eines süßen oder salzigen Kekses, einer Nachspeise oder eines Getränks.

**12.** Zusammensetzung, bestehend aus:

a) einem Tripeptid, welches einen einzigen hydrophoben Aminosäurerest und mindestens einen sauren Aminosäurerest enthält, wobei die Tripeptide Glu-Asp-Val, (Glu,Ile)-Asp, Ile-Glu-Glu, Glu-Gly-Ala, Glu-Arg-Pro, Glu-Glu-Ala, Glu-His-Pro, Glu-Asn-Trp, Glu-Gln-Trp, Glu-Leu-Gly und Asp-Glu-Leu ausgenommen sind; oder

b) einem Aminosäurederivat mit einer Struktur vom Typ N-Lactoyl-X, worin X für einen Aminosäurerest steht, wobei die Derivate Lac-Leu, Lac-Ile, Lac-Ala, Lac-Val, Lac-Gly und Lac-Phe ausgenommen sind.

## Claims

**1.** Use as a flavouring ingredient of:

a) one or more tripeptides containing one hydrophobic amino acid residue and at least one acidic amino acid residue, provided that the tripetides Glu-Asp-Val, (Glu,Ile)-Asp, Glu-Gly-Ala and Ile-Glu-Glu are excluded; and/or
b) one or more amino acid derivatives having a structure of the N-lactoyl-X type, where X represents an amino acid residue.

**2.** Use according to claim 1, **characterised in that** one or more tripeptides and/or one or more amino acid derivatives as defined in claim 1 are added to an edible product for man or animals, or to a pharmaceutical product, in a sufficient quantity to impart, improve or increase the mouthfeel of said product.

**3.** Use according to claim 1 or 2, **characterised in that** the tripeptide contains two acidic amino acid residues.

**4.** Use according to any one of claims 1 to 3, **characterised in that** the acidic residue or residues of the tripeptide are glutamyl residues.

**5.** Use according to claim 4, **characterised in that** the tripeptide is selected from Glu-Glu-Leu, Glu(Glu-Leu), Leu-Glu-Glu, Glu-Asp-Phe, Glu-Glu-Ile, Asp-Glu-Leu and Glu-Leu-Glu.

**6.** Use according to claim 1 or 2, **characterised in that** the amino acid derivative is selected from Lac-Glu, Lac-Ala and Lac-Met.

**7.** Use according to one of the preceding claims, **characterised in that** the tripeptide and/or amino acid derivative is mixed with one or more amino acids.

**8.** A flavouring composition containing as a flavouring ingredient:

a) one or more tripeptides containing one hydrophobic amino acid residue and at least one acidic amino acid residue; and/or
b) one or more amino acid derivatives having a structure of the N-lactoyl-X type, where X represents an amino acid residue,

together with at least a flavoring coingredient, a solvent or an adjuvant of current use, provided that the fish hydrolysats containing the tripetides Glu-Asp-Val, (Glu,Ile)-Asp, Glu-Gly-Ala and Ile-Glu-Glu are excluded.

**9.** A flavouring composition according to claim 8, **characterised in that** it also contains one or more amino acids.

**10.** An edible product for man or animals, containing as a flavouring ingredient:

a) one or more tripeptides containing one hydrophobic amino acid residue and at least one acidic amino acid residue; and/or
b) one or more amino acid derivatives having a structure of the N-lactoyl-X type, where X represents an amino acid residue,

or a composition according to claim 8 or 9.

**11.** An edible product according to claim 10, in the form of a butter or margarine, mayonnaise, chocolate, cream or ice-cream, soup, sauce, ready-to-eat meal, sweet or savoury biscuit, dessert or drink.

**12.** A compound consisting of:

a) a tripeptide containing one hydrophobic amino acid residue and at least one acidic amino acid residue, provided that the tripeptides Glu-Asp-Val, (Glu,Ile)-Asp, Ile-Glu-Glu, Glu-Gly-Ala, Glu-Arg-Pro, Glu-Glu-Ala, Glu-His-Pro, Glu-Asn-Trp, Glu-Gln-Trp, Glu-Leu-Gly and Asp-Glu-Leu are excluded; or
b) an amino acid derivative having a structure of the N-lactoyl-X type, where X represents an amino acid residue, provided that the Lac-Leu, Lac-Ile, Lac-Ala, Lac-Val, Lac-Gly and Lac-Phe derivatives are excluded.